# EUROPEAN PATENT APPLICATION

(11) **EP 1 376 826 A2**
(43) Date of publication of application: **02.01.2004**
(21) Application number: 03253646.8
(22) Date of filing: 10.06.2003
(51) Int. Cl.: H02K 15/03

(54) **Motor rotor and manufacturing method thereof**

(30) Priority: 17.06.2002 JP 2002175781
(71) Applicant: MINEBEA CO., LTD., Kitasaku-gun, Nagano-ken (JP)
(72) Inventor: Takuji, Hamamura, c/o Minebea Co., Ltd, Kitasaku-gun, Nagano 389-0293 (JP); Moritsugi,Katsuyuki, c/o Minebea Co., Ltd, Kitasaku-gun, Nagano 389-0293 (JP)
(74) Representative: Wilson Gunn Gee

(57) **Abstract**

A motor rotor containing a permanent magnet being covered with a synthetic resin tube. The synthetic tube is shrunk by heating to coat the permanent magnet. The permanent magnet is protected by the synthetic resin.

## Description

The present invention relates to a motor rotor having permanent magnet mounted thereon and a method for manufacturing the same.

Among direct current motors and alternate current motors, there are motors with permanent magnets mounted on the rotor. Permanent magnets such as sintered ferrite magnets, ferrite bonded magnets, sintered Sm-Co magnets, Sm-Co bonded magnets, sintered Nd-Fe magnets, Nd-Fe bonded magnets and alnico magnets are used as permanent magnets for motors. However, depending on their nature, cracking, breaking or chipping can occur more easily. If a crack, break or chip occurs in the permanent magnet, a fragment falls into the motor, there potentially is a problem such as the fragment becoming stuck between the stator and the rotor causing locking of the shaft. In particular, for motors in vehicles, in an environment of high vibration, high temperatures, etc., a high reliability and resistance to cracking are required. Therefore, such damages to permanent magnets become problematic.

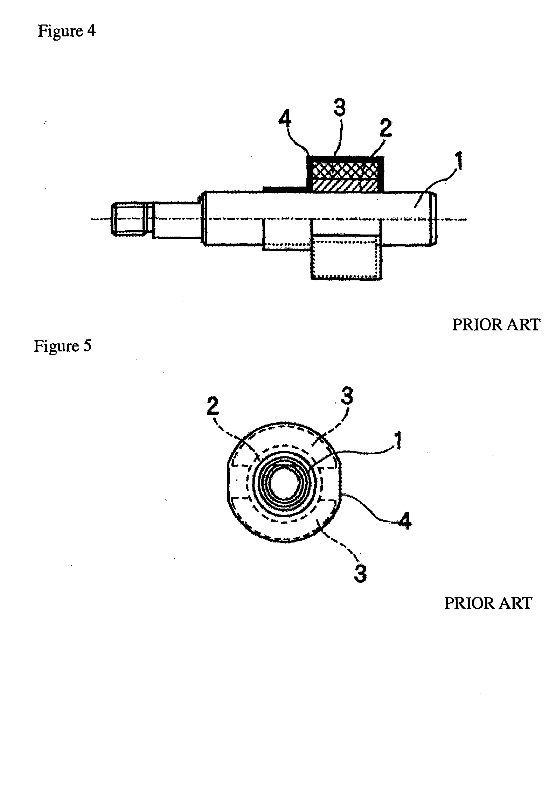

In the past, motors used in vehicles contained a rotor such as the one shown in Figures 4 and 5. In the rotor shown in Figures 4 and 5, a permanent magnet 3 is fixed on shaft 1 via a bush 2. Further, a synthetic resin layer 4 is formed in one piece at the periphery of permanent magnet 3. Thus, by coating the periphery of the permanent magnet 3 with a synthetic resin layer 4, permanent magnet 3 can be protected Therefore, even if a crack occurred, the fragment does not fall into the motor. This ensures that defects such as jamming of shaft 1 due to damage of permanent magnet 3 is prevented.

In addition, some motors contain a rotor in which the periphery of the permanent magnet is protected by covering it with a thin-walled metallic cover.

However, the following problems exist with the above-mentioned rotors. To mold the synthetic resin layer 4, production facilities such as molds and injection molding machines are required, which increase costs. In addition, it is difficult to guarantee the necessary dimensional precision relative to the gap with the motor stator. When injection molding the synthetic resin layer, the rotor reaches a high temperature, and it is necessary to consider the deterioration of the magnetic characteristics of the permanent magnet and of the adhesive. When the permanent magnet is covered with a metallic cover, it is difficult to maintain the dimensional precision, and high manufacturing costs are incurred.

An object of the present is to provide a motor rotor and a manufacturing method for protecting the permanent magnet.

Another object is to prevent the deterioration of the permanent magnet resulting from the temperature during manufacturing.

A further object is to lower the manufacturing costs.

These and other objects and advantages are achieved by the present invention by coating the periphery of the permanent magnet with a heat-shrinkable synthetic resin tube.

When the permanent is covered with a synthetic resin tube before shrinking and heating, the synthetic resin tube shrinks to coat and protect the permanent magnet.

The synthetic resin tube contracts from being heated. The percentage of contraction in the lateral direction is greater than the percentage of contraction in the axial direction.

Placement of the synthetic resin tube around the permanent magnet can be performed easily.

The method for manufacturing the motor rotor comprises covering the motor rotor with permanent magnet mounted with a heat-shrinkable synthetic resin tube. The synthetic resin tube is heat shrunk to coat the periphery of the permanent magnet.

The permanent magnet can be coated easily with a synthetic resin by simply covering the permanent magnet with a synthetic resin and heating.

In addition, the motor rotor further includes the synthetic resin tube having a percentage of contraction in the lateral direction greater than the percentage of contraction in the axial direction.

Therefore, placement of the synthetic resin tube relative to the permanent magnet can be performed easily.

The above advantages and features are of representative embodiments only. It should be understood that they are not to be considered limitations on the invention as defined by the claims. Additional features and advantages of the invention will become apparent in the following description, from the drawings, and from the claims.

The invention is illustrated by way of example and not limitation and the figures of the accompanying drawings in which like references denote like or corresponding parts, and in which:

Figure 1 shows a side view of a motor rotor according to the present invention;

Figure 2 shows a front view of the motor rotor of Figure 1;

Figure 3 shows the synthetic resin tube before shrinkage;

Figure 4 shows the prior art motor rotor; and

Figure 5 shows a front view of the prior art shown in Figure 4.

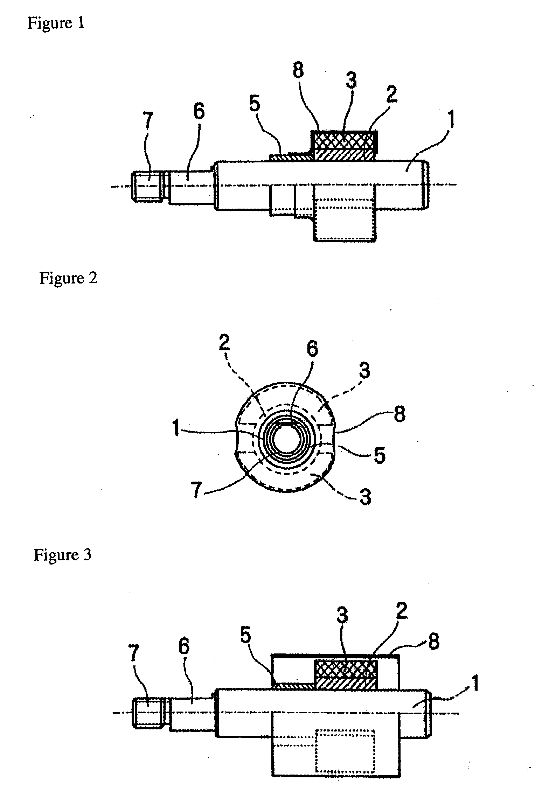

As shown in Figures 1 and 2, the motor rotor of the present embodiment comprises a cylindrical bush 2 adhered to shaft 1. At the periphery of bush 2, a pair of permanent magnets 3 having a cylindrical shape and the same curvature as the periphery of bush 2 are adhered and fixed. In addition, a bush 5 having an outer diameter that is narrower than bush 2 is fitted adjacent to bush 2.

Shaft 1 comprises a chamfered portion 6 having an overall D-shaped cross-section at one end, at the extremity of which a screw portion 7 is formed. Permanent magnet 3 is a sintered Sm-Co magnet with its, size in the axial direction, being the same as that of bush 2. An appropriate adhesive is used to adhere permanent magnet 3 firmly to bush 2.

The periphery of the pair of permanent magnets is coated with a heat-shrinkable synthetic resin tube 8. Synthetic resin tube 8 stretches in the axial and lateral directions, from the center of bush 5 spanning permanent magnets 3 and bush 2, and covers them.

Synthetic resin tube 8 is made of a thin-walled synthetic resin having thermal contraction properties and shrinks by heating. For example, it can be manufactured by sending an electron beam to a synthetic resin of polyolefin to facilitate cross-linking giving it a shape memory property.

In the present embodiment, the synthetic resin tube 8 has a short shrinkage time, and a small percentage of contraction in the axial direction (about 15%) with respect to the percentage of contraction in the lateral direction (about 50%). The synthetic resin used is incombustible, thin-walled, and has an appropriate flexibility. In addition, the materials use conditions and standards that can be selected accordingly.

The method for manufacturing a motor rotor according to the present embodiment is shown in Figure 3.

The assembly comprising bushes 2 and 5 as well as permanent magnet 3 is covered with a synthetic resin tube 8 (with a diameter before shrinkage larger than the permanent magnet). Resin tube 8 is cut to a specific length, and all components are positioned and aligned using an appropriate jig or the like. The assembly is heated to a given shrinking temperature in a high temperature atmosphere using a high temperature bath, a heating furnace, an oven, etc., to shrink synthetic resin tube 8 into close contact to cover the permanent magnet 3 and bushes 2 and 5. The heating conditions such as the heating temperature and time can be selected according to the type of synthetic resin tube 8, the size of the rotor, the materials, etc. Thus, the motor rotor can be manufactured easily.

In addition, if there is a protrusion, an edge, or the like on the permanent magnet which contacts the synthetic resin tube 8, cracking may occur in the synthetic resin tube 8. Therefore, if needed, a chamfer or a fillet may be created.

Since permanent magnet 3 is protected by synthetic resin tube 8, even if a crack, break or chip occurs to permanent magnet 3, the fragment does not fall into the motor. Therefore, the reliability and durability of the motor is increased. Since synthetic resin tube 8 contracts in the lateral direction more than it contracts in the axial direction due to heating, the positioning of the synthetic resin tube relative to the permanent magnet can be performed easily.

Since the synthetic resin tube 8 forms a thin-walled layer when it thermally contracts, the influence on the gap between the motor rotor and stator is small. The dimensional accuracy of the other parts (such as bush 2, permanent magnet 3 and stator) need not be considered.

Since there is no influence on the magnetic properties of permanent magnet 3 and the adhesive between permanent magnet 3 and bush 2 from the heating process, there is no need to consider those in particular. In addition, the manufacturing process employs a simple heating device so that installations of molds and injection molding machines of the past are unnecessary. Therefore, the cost can be considerably diminished.

In addition, the present invention can be applied to all types of motors that contain permanent magnets, regardless of the type of motor such as direct current motors, alternate current motors, induction motors, etc. Furthermore, although it is particularly suited for those using cast magnets and sintered magnets, it can be applied equally to those with bonded magnets, plastic formed magnets and other types of permanent magnets.

As described above, since the permanent magnet is coated with a heat-shrinkable synthetic resin tube, the permanent magnet is protected. Also, manufacturing is easy and the manufacturing costs are decreased. In addition, the deterioration of the permanent magnet resulting from the manufacturing temperature is prevented.

Positioning of the synthetic resin tube with respect to the permanent magnet can be performed easily.

By covering the permanent magnet mounted on the rotor with a synthetic resin tube and heating, the permanent magnet can be coated with a synthetic resin tube easily. Therefore, the rotor can be manufactured easily and the manufacturing cost can be decreased.

For the convenience of the reader, the above description has focused on a representative sample of all possible embodiments, a sample that teaches the principles of the invention and conveys the best mode contemplated for carrying it out. The description has not attempted to exhaustively enumerate all possible variations. Other undescribed variations or modifications may be possible. For example, where multiple alternative embodiments are described, in many cases it will be possible to combine elements of different embodiments, or to combine elements of the embodiments described here with other modifications or variations that are not expressly described. Many of those undescribed variations, modifications and variations are within the literal scope of the following claims, and others are equivalent.

## Claims

1. A motor rotor comprising:
a permanent magnet secured to said motor rotor; and
a heat-shrinkable synthetic resin tube coating applied to said permanent magnet.

2. The motor rotor according to claim 1, wherein said synthetic resin tube has a percentage of contraction in a lateral direction and a percentage of contraction in an axial direction, said percentage of contraction in the lateral direction being greater than said percentage of contraction in the axial direction.

3. A method for manufacturing a motor rotor having a permanent magnet mounted thereon, comprising the steps of:
covering the permanent magnet with a heat-shrinkable synthetic resin tube; and
heating said synthetic resin tube to coat a periphery of the permanent magnet.

4. The method for manufacturing a motor rotor according to Claim 3, wherein said synthetic resin tube has a percentage of contraction in a lateral direction and a percentage of contraction in the axial direction from heating, said percentage of contraction in the lateral direction being greater than said percentage of contraction in the axial direction.

5. A motor comprising:
A motor rotor, said motor rotor having a permanent magnet mounted thereon and a heat-shrinkable synthetic resin tube coating applied to said permanent magnet.

6. The motor according to Claim 5, wherein said synthetic resin tube has a percentage of contraction in a lateral direction and a percentage of contraction in an axial direction, said percentage of contraction in the lateral direction being greater than said percentage of contraction in the axial direction.
